Europäisches Patentamt

European Patent Office

Office européen des brevets

(19)

(11) Veröffentlichungsnummer: **0 015 378**
**B1**

(12) **EUROPÄISCHE PATENTSCHRIFT**

(45) Veröffentlichungstag der Patentschrift:
25.04.84

(51) Int. Cl.³: **F 16 F 15/04, F 16 F 7/10**

(21) Anmeldenummer: **80100422.7**

(22) Anmeldetag: **28.01.80**

(54) **Schwingungsisolator.**

(30) Priorität: 01.03.79 DE 2907926
20.12.79 DE 2951526

(43) Veröffentlichungstag der Anmeldung:
17.09.80 Patentblatt 80/19

(45) Bekanntmachung des Hinweises auf die Patenterteilung:
25.04.84 Patentblatt 84/17

(84) Benannte Vertragsstaaten:
FR GB IT

(56) Entgegenhaltungen:
EP - A - 0 006 819
CA - A - 781 817
DE - A - 1 955 344
DE - A - 2 040 968
DE - B - 1 035 413
DE - C - 944 156
FR - A - 2 246 224
GB - A - 888 908
GB - A - 1 292 021
US - A - 2 919 883
US - A - 3 288 419
US - A - 3 322 379
US - A - 3 445 080

(73) Patentinhaber: Messerschmitt-Bölkow-Blohm
Gesellschaft mit beschränkter Haftung,
Robert-Koch-Strasse, D-8012 Ottobrunn (DE)

(72) Erfinder: Braun, Dieter, Dr., Alpspitzstrasse 8,
D-8011 Oberpframmern (DE)

Schwingungsisolator

Die Erfindung betrifft einen als Antiresonanzkraftisolator wirkenden Schwingungsisolator nach dem Oberbegriff der Ansprüche 1 und 2.

Der erfindungsgemäße Schwingungsisolator kann überall dort eingesetzt werden, wo eine periodische Erregung isoliert werden soll. Dies ist insbesondere der Fall bei Kolbenmaschinen wie Schiffsmotoren, Fahrzeugmotoren, Kolbenverdichtern, Kolbenpumpen und dergleichen sowie bei Hubschraubern, bei welchen die drehflügelseitigen Schwingungen nicht auf die Zelle einwirken sollen. In der Regel werden mehrere Isolatoren zwischen dem periodisch schwingenden Teil und der Halterung zur Isolierung von Schwingungen mehrerer Freiheitsgrade angeordnet. Die Schwingungen können auch halterungsseitig eingeleitet werden, wobei dann das bisher periodisch schwingende Teil die Funktion der Halterung übernimmt.

Es sind bereits Antiresonanzkraftisolatoren bekannt, die zwischen dem Getriebe und der Zelle eines Hubschraubers angeordnet werden können, wobei ihre Anzahl von der Anzahl der Hauptachsrichtungen abhängt, in denen Schwingungen übertragen werden. Ein Antiresonanzkraftisolator besteht aus der Parallelschaltung einer Feder und eines passiven Kraftgenerators. Die Anordnung ist so abgestimmt, daß lokal eine Aufhebung der dynamischen Kräfte am zellenseitigen Befestigungspunkt erfolgt, wodurch eine Isolation der Zelle gegenüber den rotorseitigen Schwingungen erreicht wird. Als passiven Kraftgenerator hat man bereits Pendel mit einer mechanischen Hebelübersetzung verwendet (US-A-3 322 379). Diese rein mechanischen Kraftisolatoren benötigen relativ viel Platz, haben einen hohen Schwenklagerverschleiß und sind technisch nur sehr kompliziert verwirklichbar. Der zur Funktion notwendige endliche Abstand zwischen der Federkraft und der Pendellagerkraft ergibt ein Kräftepaar, welches unter anderem auf der Seite der Halterung als dynamisches Moment auftritt. Dieses Moment ist bei vielen Anwendungen, insbesondere wenn es auf eine Hubschrauberzelle zur Einwirkung gelangt, unerwünscht.

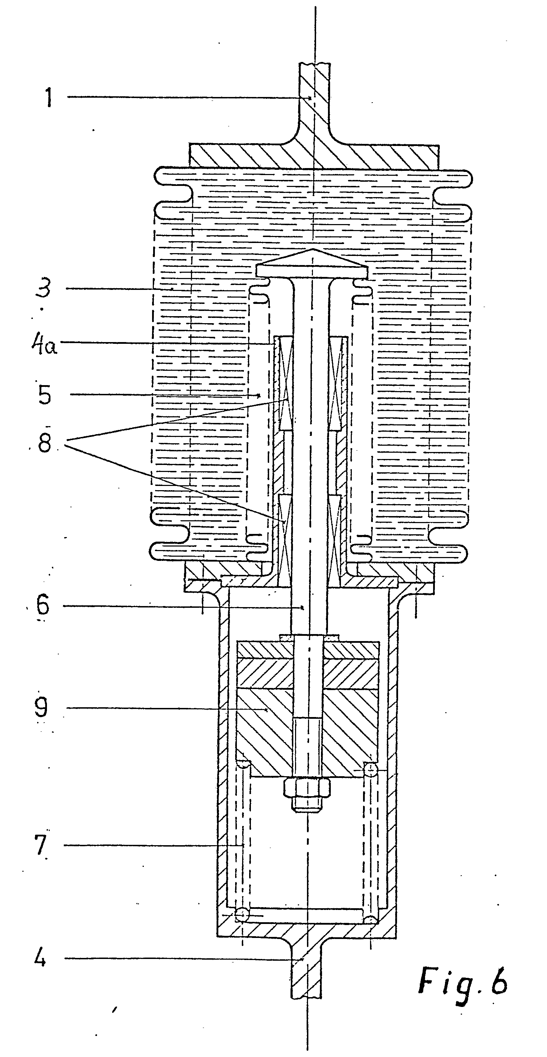

Bekannt ist außerdem, zwischen dem schwingenden Teil und der Halterung einen fluidgefüllten verformbaren Raum anzuordnen, der mit einem Zylinder verbunden ist, in welchem eine einen Freikolben bildende Masse auf dem Fluid angeordnet ist (CA-A-781 817, Fig. 6). Dieser bekannte Kraftisolator hat den Nachteil, daß sich zwischen dem Kolben und dem Zylinder Reibungskräfte sowie aufgrund der Fluidführung Strömungsverluste einstellen. Dies bedeutet, daß parallel zu dem Isolator ein Dämpfungselement angeordnet ist, wodurch die Isolationswirkung erheblich verschlechtert wird. Außerdem kann in dem Fluidraum bei zu großen Beschleunigungen Fluid aufgrund der Expansion während einer Hälfte des periodischen Bewegungsablaufes verdampfen, wodurch die Wirksamkeit des Isolators weiter beeinträchtigt wird.

Die der Erfindung zugrunde liegende Aufgabe besteht darin, den als Antiresonanzkraftisolator wirkenden Schwingungsisolator der eingangs beschriebenen Art als praktisch einsetzbares kompaktes Bauelement auszubilden, das im wesentlichen verschleißfrei funktioniert.

Diese Aufgabe wird erfindungsgemäß sowohl durch die kennzeichnenden Merkmale des Anspruchs 1 als auch durch die des Anspruchs 2 gelöst.

Der erfindungsgemäße Schwingungsisolator hat den Vorteil, daß er kompakt und robust gebaut ist, keinerlei Beschränkung hinsichtlich der Positionierung unterworfen ist und seine Funktion verschleißfrei erfüllt.

Bei dem erfindungsgemäßen Antiresonanzkraftisolator ruft der durch eine periodische Relativbewegung des schwingenden Teils gegenüber der Halterung verursachte Hub des primären Fluidraums einen um das Verhältnis der wirksamen Querschnitte größeren Hub des sekundären Raumes hervor. Die aus der Beschleunigung der Pendelmasse resultierende Trägheitskraft erzeugt im Fluid eine Druckänderung, die sich als dynamische Kraft an dem schwingenden Teil bzw. an der Halterung bemerkbar macht. Diese dynamische Kraft wird an der Halterung zur Tilgung des dynamischen Anteils der von der Isolatorfeder auf die Halterung wirkenden Federkraft benutzt. Bei geeigneter Abstimmung des Systems wird bei einer bestimmten Erregerfrequenz, der Antiresonanzfrequenz, im Idealfall mit vorausgesetzter Reibungs- bzw. Dämpfungsfreiheit eine vollständige Aufhebung der dynamischen Kräfte an der Halterung des Isolators erreicht, also beispielsweise an der zellenseitigen Befestigung eines Hubschraubers, wenn das schwingende Teil die getriebeseitige Isolatorbefestigung ist.

Wenn sich der sekundäre Raum innerhalb des primären Fluidraums befindet, um die Baulänge des Schwingungsisolators weiter zu reduzieren, ist der sekundäre Raum mit der Umgebungsatmosphäre verbunden. Er kann auch abgeschlossen und ggf. mit einem unter Über- oder Unterdruck stehenden kompressiblen Medium gefüllt sein. Zur weiteren Verringerung des Raumbedarfs kann der primäre Fluidraum einen verformbaren Abschnitt und einen starren Abschnitt aufweisen, der gegenüber dem verformbaren Abschnitt auch einen kleineren Querschnitt haben kann und unter Bildung eines fluidgefüllten Ringraumes wenigstens einen Teil des sekundären Raums umschließt.

Eine konstruktive Vereinfachung ergibt sich dadurch, daß die Wirkung der zwischen dem schwingenden Teil und der Halterung vorgesehenen Feder von dem den primären Fluidraum bildenden Metallbalg übernommen wird, der dafür die erforderliche Eigensteifigkeit hat.

Bei dem Schwingungsisolator mit einem zweiten, aus einem primären Fluidraum und einem sekundären Raum bestehenden System, kann das Verbindungsglied eine die Pendelmasse tragende, die sekundären Räume durchsetzende Stange sein. Außerdem können die beiden sekundären Räume in Form eines gemeinsamen Raums zusammengefaßt werden, was die praktische Ausführung vereinfacht.

Besonders vorteilhaft ist die Lehre nach dem Anspruch 12, da sie praktisch eine Dämpfungsfreiheit des erfindungsgemäßen Schwingungsisolators sichert.

Anhand der Zeichnung wird die Erfindung beispielsweise näher erläutert. Es zeigt

Fig. 1 im Längsschnitt schematisch eine erste Ausführungsform eines erfindungsgemäßen Antiresonanzkraftisolators,

Fig. 2 in einer Ansicht wie Fig. 1 eine Modifizierung dieser Ausführungsform,

Fig. 3 im Längsschnitt eine zweite Ausführungsform eines Antiresonanzkraftisolators,

Fig. 4 in einer Ansicht wie Fig. 3 eine Modifizierung dieser Ausführungsform, und

Fig. 5 eine weitere Modifizierung,

Fig. 6 in einer Ansicht wie Fig. 2 eine weitere Modifizierung dieser Ausführungsform.

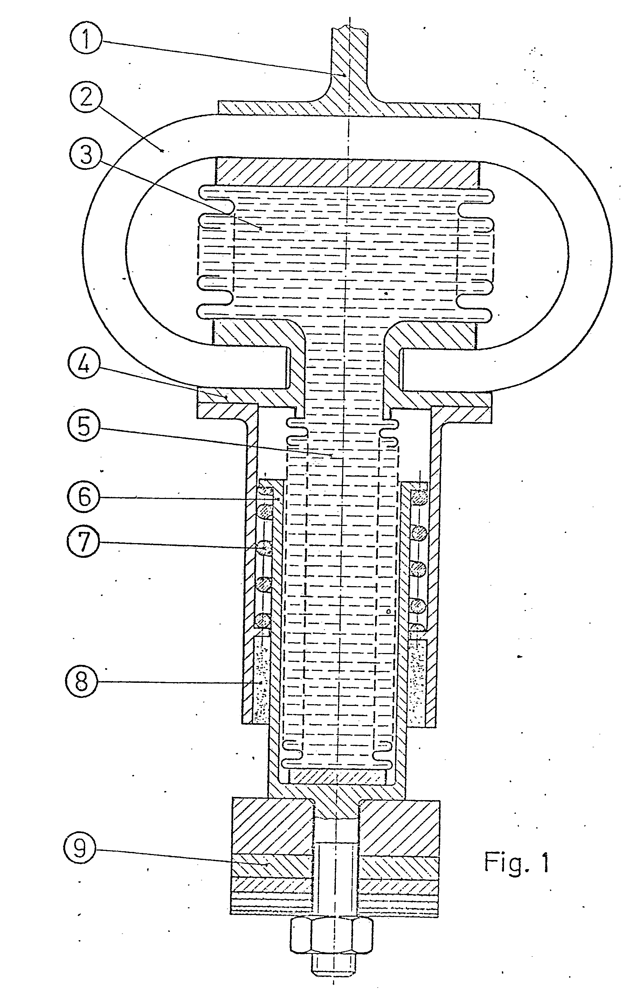

Die in den Fig. 1 bis 5 gezeigten Antiresonanzkraftisolatoren haben jeweils einen Teil 1 für das Einleiten der Schwingung, das beispielsweise der getriebeseitige Befestigungspunkt des Isolators bei einem Hubschrauber sein kann. Das schwingende Teil 1 ist über eine Isolatorfeder 2 mit einer Halterung 4 verbunden, bei der es sich beim Anbringen in einem Hubschrauber um einen zellenseitigen Befestigungspunkt handelt. Selbstverständlich können die Schwingungen auch über die Halterung 4 eingeleitet werden. In diesem Fall übernimmt dann Teil 1 die Funktion der Halterung. Die Isolatorfeder besteht bei dem gezeigten Ausführungsbeispiel aus einer Ringfeder aus glasfaserverstärktem Kunststoff. Es können jedoch auch Blattfedern, Schraubenfedern oder andere Federelemente verwendet werden. Gegebenenfalls kann die Isolatorfeder entfallen, wenn die Eigensteifigkeit des im folgenden beschriebenen Systems der verformbaren Räume ausreichend ist.

Parallel zu der Isolatorfeder 2 ist ein System von einem oder zwei primären Fluidräumen 3 angeordnet, die aus zylindrischen, in Axialrichtung verformbaren gewellten Metallbälgen oder Membranbälgen bestehen. Ein System mit einem oder zwei sekundären verformbaren Räumen 5, die ebenfalls aus Metall- oder Membranbälgen (teilweise in Fig. 1 dargestellt) bestehen, und deren Querschnitt kleiner als der der primären Fluidräume 3 ist, ist in Fig. 1 bis 4 in Axialrichtung durch ein reibungsarmes Lager 8, das beispielsweise aus einer Kugelbüchse bestehen kann, geführt. Am freien Ende des Sekundärbalgsystems ist eine Pendelmasse 9 befestigt, die zur Feinabstimmung aus mehreren Scheiben bestehen kann.

Bei der in Fig. 1 gezeigten Ausführungsform geht der Fluidraum des primären Balgs 3 über eine abgerundete Ringkante in den ebenfalls mit Fluid gefüllten Innenraum des sekundären Balgs 5 über. Der sekundäre Balg ist an seinem freien Ende mit einem Verbindungselement 6 verbunden, das aus einer den Balg mit Spiel umgebenden Büchse besteht, an der das eine Ende einer Feder 7 anliegt, deren anderes Ende an einem Innenflansch der Halterung 4 oberhalb des Lagers 8 so angreift, daß die Pendelmasse 9 in die gezeigte Ruhestellung vorgespannt ist. Die Federvorspannung ist so bemessen, daß sich im Betrieb des Isolators im Fluidraum keine Volumenvergrößerung einstellt.

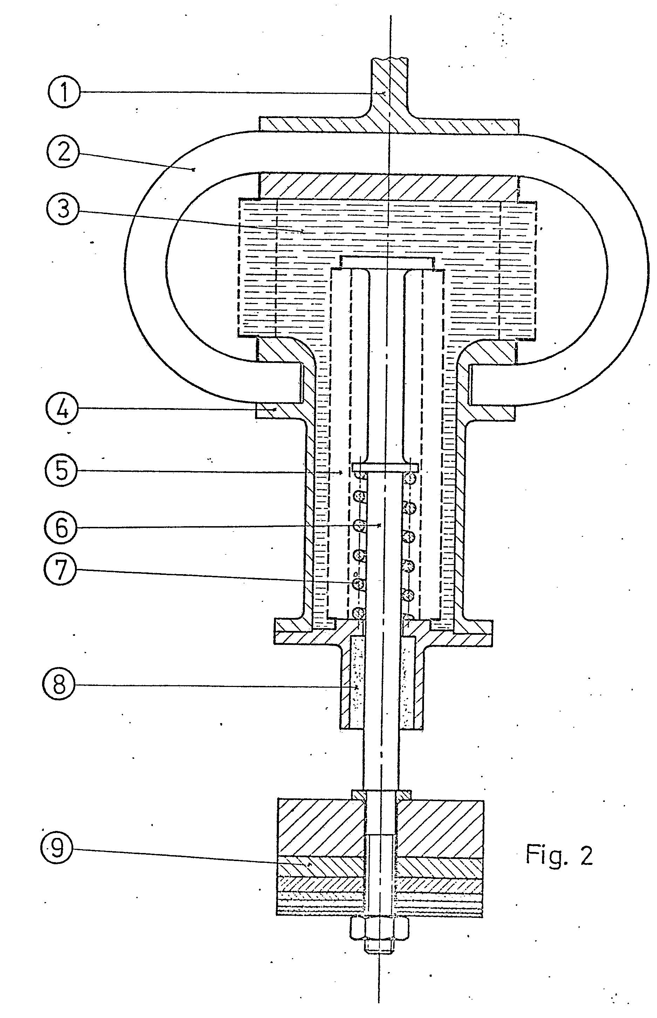

Bei der in Fig. 2 gezeigten Ausführungsform befindet sich der sekundäre Balg 5 im Inneren des dem primären Balg 3 zugeordneten Fluidraums. Der Innenraum des sekundären Balgs 5 ist an seiner halterungsseitigen Stirnseite mit der Atmosphäre verbunden. Der dem primären Balg 3 zugeordnete Fluidraum besteht aus einem ersten, axial verformbaren Abschnitt und aus einem zweiten starren Abschnitt, dessen Querschnitt zur Raumeinsparung gegenüber dem des ersten verformbaren Abschnitts verringert ist. Der starre Abschnitt umschließt einen Teil des sekundären Balges 5, wobei der dazwischen verbleibende Ringraum mit Fluid gefüllt ist, das mit dem Innenraum des primären Balges 3 in Verbindung steht. Das Verbindungselement 6 besteht aus einer Stange, an der die Pendelmasse 9 hängt, die in einem halterungsseitigen Lager 8 geführt ist und an der Stirnseite des sekundären Balges 5 befestigt ist, die sich im Inneren des primären Balges 3 befindet. Die Feder 7 ist zwischen einem Bund an der Stange 6 im Inneren des mit der Atmosphäre verbundenen Innenraumes des sekundären Balges 5 und der Halterung 4 angeordnet.

Die in den Fig. 1 und 2 gezeigten Ausführungsformen eines Antiresonanzkraftisolators arbeiten folgendermaßen: Wenn die Isolatorfeder zusammengedrückt wird, verringert sich das Volumen des primären Balges 3. Der sekundäre Balg 5 wird bei der Ausführungsform von Fig. 1 auseinandergedrückt, bei der Ausführungsform von Fig. 2 zusammengeschoben. Dabei bewegt sich die Pendelmasse 9, die über das Verbindungsglied 6 mit dem unteren (Fig. 1) bzw. oberen (Fig. 2) Ende des sekundären Balges 5 verbunden ist, nach unten. Je näher die Pendelmasse 9 dem unteren toten Punkt des periodischen Bewegungsablaufes kommt, desto stärker wird die Pendelmasse 9 abgebremst, d. h. desto größer wird die nach unten gerichtete, auf die Masse wirkende Trägheitskraft. Diese Trägheitskraft ruft innerhalb des Balgsystems eine Druckabsenkung hervor. Daraus resultiert eine nach oben gerichtete Kraft auf die Halterung 4. Der dynamische Anteil der Kraft, die die Isolatorfeder 2 auf die Halterung 4 ausübt, ist zu diesem Zeitpunkt nach unten gerichtet. Bei geeigneter Isolatorabstimmung ist für eine bestimmte Erregerfrequenz, die Antiresonanzfrequenz, die Summe der an der Halterung 4 angreifenden dynamischen Kräfte gleich Null, d. h. die Halterung 4 bleibt gegenüber dem schwingenden Teil 1 in Ruhe. Die Vorspannung der Feder 7 ist so gewählt, daß in der betrachteten Phase des Bewegungsablaufs keine Vergrößerung des Gesamtvolumens des Balgsystems erzeugt wird. Wenn die auftretenden Trägheitskräfte genügend klein sind, kann die Feder 7 entfallen. Die Feder 7 kann bei den Ausführungsformen nach Fig. 1 und 2 auch dann entfallen, wenn die Funktion dieser Feder von einem kompressiblen Medium im sekundären Raum 5 nach Fig. 2 oder in einem den sekundären Raum 5 von Fig. 1 umschließenden abgeschlossenen Mantel (nicht dargestellt) übernommen wird. Die Feder 7 oder die entsprechende Gasfederung ermöglicht gegebenenfalls den Wegfall der Isolatorfeder 2.

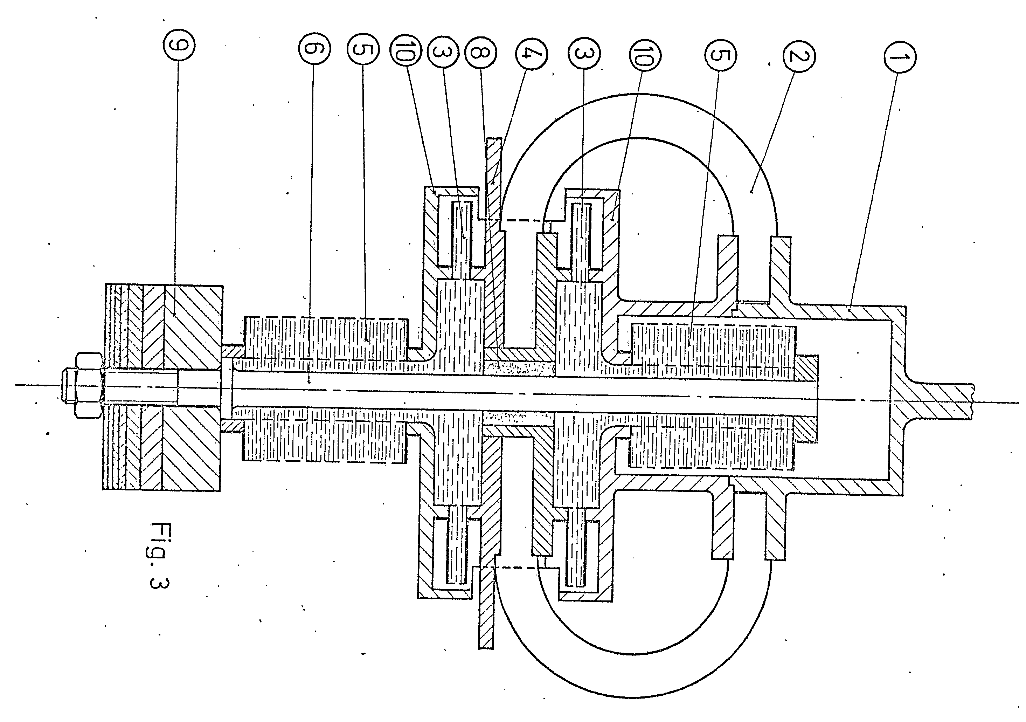

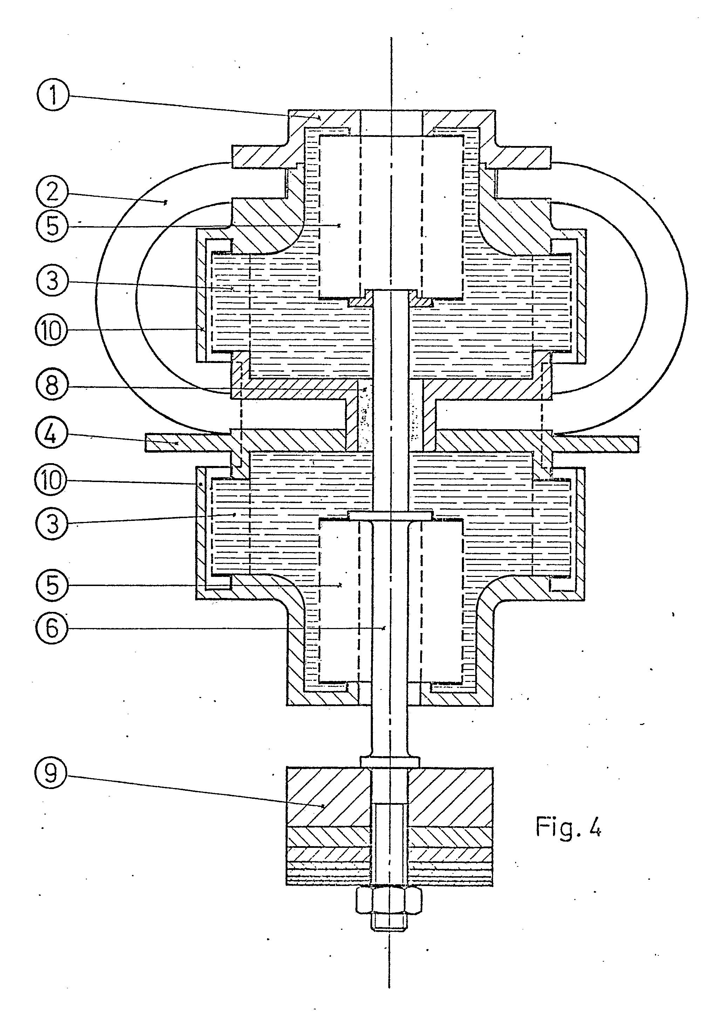

Bei den in den Fig. 3 und 4 gezeigten Ausführungsformen des Antiresonanzkraftisolators ist ein doppeltes Balgsystem vorgesehen. Jedes Balgsystem der Ausführungsform von Fig. 3 entspricht dem Balgsystem von Fig. 1, jedes Balgsystem der Ausführungsform von Fig. 4 entspricht dem Balgsystem von Fig. 2. Bei diesen Ausführungsformen sind die primären Balge 3 durch ein Verbindungsglied 10 steif miteinander verbunden, während die steife Verbindung der sekundären Balge 5 aus einer sie durchsetzenden Verbindungsstange 6 besteht, an der die Pendelmasse 9 sitzt.

Wenn die Isolatorfeder 2 bei den Ausführungsformen der Antiresonanzkraftisolatoren der Fig. 3 und 4 zusammengedrückt wird, verringert sich das Volumen des oberen primären Balges 3. Da das obere Ende des oberen primären Balges 3 über das Verbindungsglied 10 mit dem unteren Ende des unteren primären Balges 3 verbunden ist, vergrößert sich das Volumen des unteren primären Balgs 3 um den gleichen Betrag. Damit wird der obere sekundäre Balg 5 bei der Ausführungsform von Fig. 3 auseinandergedrückt, bei der Ausführungsform von Fig. 4 komprimiert, während der untere sekundäre Balg 5 bei der Ausführungsform von Fig. 3 zusammengeschoben, bei der Ausführungsform von Fig. 4 auseinandergeschoben wird. Die Verbindungsstange 6, die mit den beiden sekundären Balgen 5 verbunden ist, bewegt sich mit der Pendelmasse 9 nach oben. Je weiter sich die Pendelmasse dem oberen toten Punkt nähert, desto stärker wird sie abgebremst. Die sich daraus ergebende, nach oben gerichtete Trägheitskraft nimmt zu. Dabei erhöht sich der Druck im unteren Balgsystem bzw. verringert sich der Druck im oberen Balgsystem. Aus diesen Druckänderungen resultiert eine nach oben gerichtete Kraft auf die Halterung 4. Die Kraft, die von der Isolatorfeder 2 auf die Halterung 4 ausgeübt wird, ist zu diesem Zeitpunkt nach unten gerichtet. Bei geeigneter Abstimmung heben sich für eine bestimmte Erregerfrequenz, nämlich die Antiresonanzfrequenz, beide Kräfte gegenseitig auf, d. h. die Halterung 4 bleibt gegenüber dem schwingenden Teil 1 in Ruhe. Das Doppelbalgsystem gewährleistet, daß zu jedem Zeitpunkt des periodischen Bewegungsablaufes in einem der beiden Balgsysteme eine Druckerhöhung stattfindet, so daß eine Volumenvergrößerung in keinem der beiden Systeme auftreten kann. Eine Kompensation der Wärmeausdehnung des Fluids kann z. B. über eine Drosselbohrung und einen kleinen sich daran anschließenden Balg vorgenommen werden (nicht dargestellt).

Bei den Ausführungsformen nach Fig. 3 und 4 kann die Isolatorfeder 2 entfallen, wenn deren Funktion durch entsprechende Gasfederung übernommen wird, die durch ein kompressibles Medium erreicht wird, das sich bei Fig. 3 in einem wenigstens einen der sekundären Räume 5 umschließenden abgeschlossenen Mantel oder bei Fig. 4 in wenigstens einem der sekundären Räume 5 befindet.

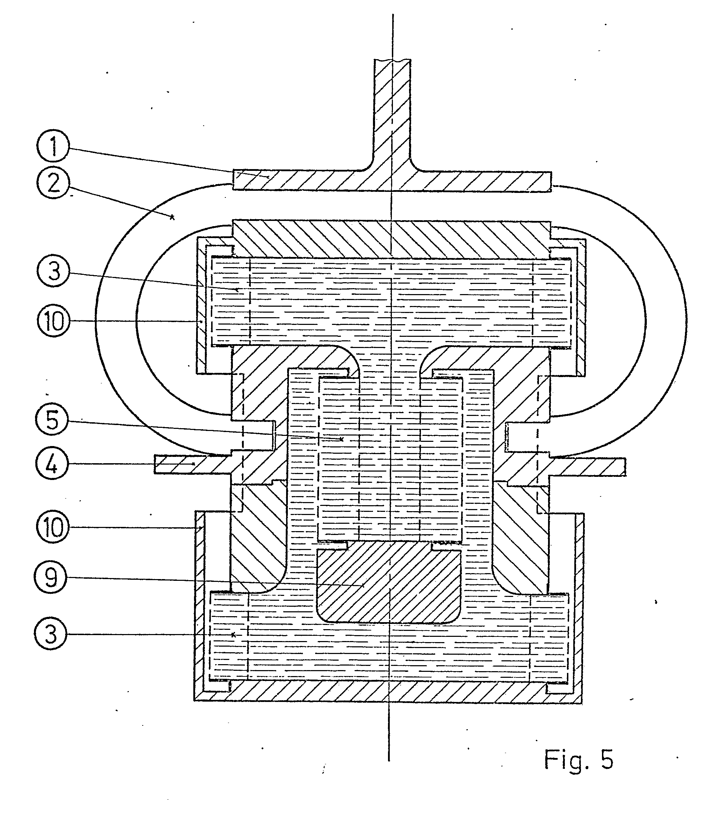

Die in Fig. 5 dargestellte Anordnung arbeitet prinzipiell ähnlich wie die in den Fig. 3 und 4 dargestellten: wenn die Isolatorfeder 2 zusammengedrückt wird, verringert sich das Volumen des oberen primären Balges 3. Da dessen oberes Ende über das Verbindungsglied 10 mit dem unteren Ende des unteren primären Balges 3 verbunden ist, vergrößert sich das Volumen dieses Balges 3 um den gleichen Betrag. Damit wird der für beide Systeme gemeinsame sekundäre Balg 5 auseinandergeschoben, und die hier mit dem unteren Ende des sekundären Balges 5 direkt verbundene Pendelmasse 9 bewegt sich nach unten. Je weiter sich die Pendelmasse 9 dem unteren toten Punkt nähert, desto stärker wird sie abgebremst. Die sich daraus ergebende nach unten gerichtete Trägheitskraft nimmt zu. Die weiteren Vorgänge entsprechen den in den Fig. 3 und 4 beschriebenen. Die zuletzt beschriebene Anordnung (nach Fig. 5) benötigt insbesondere einen Balg weniger als die nach den Fig. 3 und 4.

Der in der Fig. 6 gezeigte Antiresonanzkraftisolator hat einen Teil 1 für das Einleiten der Schwingung, das beispielsweise der getriebeseitige Befestigungspunkt des Isolators bei einem Hubschrauber sein kann. Das schwingende Teil 1 ist über einen Metallbalg 3 mit einer Halterung 4 verbunden, bei der es sich beim Anbringen in einem Hubschrauber um einen zellenseitigen Befestigungspunkt handelt. Selbstverständlich können die Schwingungen auch über die Halterung 4 eingeleitet werden. In diesem Fall übernimmt dann Teil 1 die Funktion der Halterung.

Die Eigensteifigkeit des Metallbalges 3 ist so gewählt, daß der Metallbalg 3 die Funktion der Feder zwischen dem schwingenden Teil 1 und der Halterung 4 erfüllt, so daß eine Isolatorfeder 2 entfallen kann, wodurch der Gesamtaufbau des Antiresonanzkraftisolators erheblich vereinfacht wird. Der Metallbalg 3 umschließt den primären Fluidraum, in dem ein sekundärer Balg 5 aus Metall angeordnet ist, dessen Querschnitt kleiner ist als der des Metallbalgs 3. An der Stirnseite des sekundären Balgs 5, die sich in dem vom primären Metallbalg umschlossenen Fluidraum befindet, greift eine als Verbindungselement dienende Stange 6 an, die in reibungsarmen Lagern 8 axial verschiebbar geführt ist, die in einer von der Halterung 4 aus im Inneren des sekundären Balgs 5 hochstehenden Büchse 4a angeordnet sind. Der Innenraum des sekundären Balgs 5 ist an seiner halterungsseitigen Stirnseite mit der Atmosphäre verbunden. An der Stange 6 hängt außerhalb des sekundären Balgs 5 eine Pendelmasse 9. An der Stirnseite der Pendelmasse 9, die vom sekundären Balg 5 abgewandt ist, greift eine Feder 7 an, die sich an der hülsenförmig erweiterten Halterung 4 abstützt und die Pendelmasse 9 in Richtung des sekundären Balgs 5 drückt.

Der Antiresonanzkraftisolator arbeitet folgendermaßen: Wenn der die Funktion der Isolatorfeder erfüllende, ausreichend eigensteife primäre Metallbalg 3 zusammengedrückt wird, verringert sich sein Volumen. Gleichzeitig wird der sekundäre Balg 5 zusammengeschoben. Dabei bewegt sich die Pendelmasse 9, die über die Stange 6 mit dem oberen Ende des sekundären Balges 5 verbunden ist, nach unten. Je näher die Pendelmasse 9 dem unteren toten Punkt des periodischen Bewegungsablaufes kommt, desto stärker wird die Pendelmasse 9 abgebremst, d. h. desto größer wird die nach unten gerichtete, auf die Masse wirkende Trägheitskraft. Diese Trägheitskraft ruft innerhalb des Balgsystems eine Druckabsenkung hervor. Daraus resultiert eine nach oben gerichtete Kraft auf die Halterung 4. Der dynamische Anteil der Kraft, die der federnd elastische Metallbalg 3 auf die Halterung 4 ausübt, ist zu diesem Zeitpunkt nach unten gerichtet. Bei geeigneter Isolatorabstimmung ist für eine bestimmte Erregerfrequenz, die Antiresonanzfrequenz, die Summe der an der Halterung 4 angreifenden dynamischen Kräfte gleich Null, d. h. die Halterung 4 bleibt gegenüber dem schwingenden Teil 1 in Ruhe. Die Vorspannung der Feder 7 ist so gewählt, daß in der betrachteten Phase des Bewegungsablaufs keine Vergrößerung des Gesamtvolumens des Balgsystems erzeugt wird.

**Patentansprüche**

1. Schwingungsisolator zum Reduzieren der Schwingungsübertragung von einem periodisch schwingenden Teil (1) auf eine mit diesem Teil (1) verbundene Halterung (4), wobei im Antiresonanzfall im wesentlichen keine Schwingungen mehr auf die Halterung (4) übertragen werden, mit wenigstens einer zwischen dem schwingenden Teil (1) und der Halterung (4) wirksamen Feder (2) und mit einer Pendelmasse (9), die ansprechend auf die Bewegung des schwingenden Teils (1) unter Zwischenschaltung einer Fluidübertragung bewegbar ist, die aus wenigstens einem primären, in Bewegungsrichtung der Schwingungen volumenveränderbaren Fluidraum (3) und aus wenigstens einem sekundären, ebenfalls in Bewegungsrichtung der Schwingungen volumenveränderbaren, von dem aus dem primären Raum (3) verdrängten Fluid beaufschlagten Raum (5) besteht, dessen wirksamer Querschnitt kleiner als der des primären Fluidraums (3) ist, so daß das Volumen des sekundären Raumes (5) durch das bei der Volumenveränderung des primären Fluidraums (3) verdrängte Fluid entsprechend stärker verändert wird, wodurch die ihm zugeordnete Pendelmasse (9) beschleunigt wird und die daraus resultierende Trägheitskraft im Fluid eine Druckänderung bewirkt, die als dynamische Kraft den dynamischen Anteil der von der Feder auf die Halterung (4) übertragenen Federkraft kompensiert, dadurch gekennzeichnet, daß der primäre Fluidraum (3) und der sekundäre Raum (5) jeweils aus einem zylindrischen, in Axialrichtung reibungsarm verformbaren gewellten Metallbalg oder Membranbalg bestehen, wobei die Bälge an der Halterung (4) abgestützt und koaxial angeordnet sind und die Trägheits- und Federkraft auf derselben Wirkungslinie liegen, und daß eine an der Pendelmasse (9) und der Halterung (4) bzw. dem Teil (1) angreifende, zur Fluiddruckerhöhung vorgespannte Feder (7) vorgesehen ist, deren Vorspannung so bemessen ist, daß sich im Betrieb keine Vergrößerung des gesamten Fluidvolumens ergibt.

2. Schwingungsisolator zum Reduzieren der Schwingungsübertragung von einem periodisch schwingenden Teil (1) auf eine mit diesem Teil (1) verbundene Halterung (4), wobei im Antiresonanzfall im wesentlichen keine Schwingungen mehr auf die Halterung (4) übertragen werden, mit wenigstens einer zwischen dem schwingenden Teil (1) und der Halterung (4) wirksamen Feder (2) und mit einer Pendelmasse (9), die ansprechend auf die Bewegung des schwingenden Teils (1) unter Zwischenschaltung einer Fluidübertragung bewegbar ist, die aus wenigstens einem primären, in Bewegungsrichtung der Schwingungen volumenveränderbaren Fluidraum (3) und aus wenigstens einem sekundären, ebenfalls in Bewegungsrichtung der Schwingungen volumenveränderbaren, von dem aus dem primären Raum (3) verdrängten Fluid beaufschlagten Raum (5) besteht, dessen wirksamer Querschnitt kleiner als der des primären Fluidraums (3) ist, so daß das Volumen des sekundären Raumes (5) durch das bei der Volumenänderung des primären Fluidraums (3) verdrängte Fluid entsprechend stärker verändert wird, wodurch die ihm zugeordnete Pendelmasse (9) beschleunigt wird und die daraus resultierende Trägheitskraft im Fluid eine Druckänderung bewirkt, die als dynamische Kraft den dynamischen Anteil der von der Feder auf die Halterung (4) übertragenden Federkraft kompensiert, dadurch gekennzeichnet, daß der primäre Fluidraum (3) und der sekundäre Raum (5) jeweils aus einem zylindrischen, in Axialrichtung reibungsarm verformbaren gewellten Metallbalg oder Membranbalg bestehen, wobei die Bälge an der Halterung (4) abgestützt sind, koaxial angeordnet sind und die Trägheits- und Federkraft auf derselben Wirkungslinie liegen, daß ein zweites, aus einem primären Fluidraum (3) und einem sekundären Raum (5) bestehendes System vorgesehen ist, das ebenfalls aus zwei zylindrischen, reibungsarm verformbaren, gewellten Metallbalgen oder Membranbalgen besteht, die zu den Balgen des ersten Systems koaxial angeordnet sind, wobei die primären Fluidräume (3) und sekundären Räume (5) des ersten und zweiten Systems durch Verbindungsglieder (6, 10) jeweils steif miteinander gekoppelt sind und im Betrieb gemeinsam die Pendelmasse (9) beschleunigen und dabei das Volumen des einen sekundären Raums (5) verkleinert und das des anderen sekundären Raums (5) entsprechend vergrößert wird, während sich die Volumina der primären Fluidräume (3) umgekehrt verhalten.

3. Schwingungsisolator nach Anspruch 2, dadurch gekennzeichnet, daß das Verbindungsglied (6) eine die Pendelmasse (9) tragende, die sekundären Räume (5) durchsetzende Stange ist.

4. Schwingungsisolator nach Anspruch 2, dadurch gekennzeichnet, daß die beiden sekundären Räume (5) von einem gemeinsamen verformbaren Abschnitt gebildet werden.

5. Schwingungsisolator nach einem der Ansprüche 1 bis 4, dadurch gekennzeichnet, daß die zwischen dem schwingenden Teil (1) und der Halterung (4) wirksame Feder von dem den primären Fluidraum (3) bildenden, die erforderliche Eigensteifigkeit aufweisenden Metallbalg gebildet wird (Fig. 6).

6. Schwingungsisolator nach einem der Ansprüche 1 bis 5, dadurch gekennzeichnet, daß der sekundäre Raum (5) innerhalb des primären Fluidraums (3) angeordnet ist.

7. Schwingungsisolator nach Anspruch 6, dadurch gekennzeichnet, daß der sekundäre Raum (5) abgeschlossen, mit einem kompressiblen Medium gefüllt ist und von dem Fluid umspült ist.

8. Schwingungsisolator nach Anspruch 7, dadurch gekennzeichnet, daß das kompressible Medium unter Über- oder Unterdruck steht.

9. Schwingungsisolator nach Anspruch 6, dadurch gekennzeichnet, daß der sekundäre Raum (5) mit der Umgebungsatmosphäre verbunden ist.

10. Schwingungsisolator nach einem der Ansprüche 6 bis 9, dadurch gekennzeichnet, daß der primäre Fluidraum (3) einen verformbaren Abschnitt und einen starren Abschnitt aufweist, der unter Bildung eines fluidgefüllten Ringraums wenigstens einen Teil des sekundären Raums (5) umschließt.

11. Schwingungsisolator nach Anspruch 10, dadurch gekennzeichnet, daß der Querschnitt des starren Abschnitts des primären Fluidraums (3) kleiner ist als der wirksame Querschnitt des verformbaren Abschnitts.

12. Schwingungsisolator nach Anspruch 1 oder 2, dadurch gekennzeichnet, daß der sekundäre Raum (5) fluidgefüllt ist, und daß der Übergang vom primären Fluidraum (3) in den sekundären Fluidraum (5) strömungsverlustarm ausgebildet ist.

## Claims

1. A vibration isolator for reducing the transmission of oscillations from a periodically-oscillating part (1) to a mounting support (4) which is connected thereto, in which respect in the case of anti-resonance substantially no oscillations are transmitted to the mounting support (4), the isolator comprising at least one spring (2) which is effective between the oscillating part (1) and the mounting support (4), a pendulum mass (9) which is movable in response to the motion of the oscillating part (1) along with interpolation of a fluid transmission, at least one primary fluid chamber (3) which is variable in volume in the direction of motion of the oscillations and at least one secondary chamber (5) which is likewise variable in volume in the direction of motion of the oscillations and which is acted upon by the fluid displaced from the primary chamber (3) and the effective cross-section of which is smaller than that of the primary fluid chamber (3), so that the volume of the secondary chamber (5) is varied correspondingly more severely by the fluid displaced upon the variation in volume of the primary fluid chamber (3), whereby the pendulum mass (9) associated with it is accelerated and the resulting inertia force in the fluid brings about a change of pressure which as dynamic force compensates for the dynamic portion of the spring force transmitted from the spring to the mounting support (4), characterised in that the primary fluid chamber (3) and the secondary chamber (5) consist in each case of a cylindrical corrugated metal bellows or diaphragm bellows which is deformable in a low-friction manner in the axial direction, in which respect the bellows are supported on the mounting support (4) and are arranged axially and the inertia force and spring force lie on the same line of action and in that a spring (7) which acts on the pendulum mass (9) and the mounting support (4) or respectively the part (1) and which is biassed for the increase in fluid pressure is provided, the bias of which is so dimensioned that in operation no enlargement of the overall fluid volume ensues.

2. A vibration isolator for reducing the transmission of oscillations from a periodically-oscillating part (1) to a mounting support (4) which is connected thereto, in which respect in the case of anti-resonance substantially no oscillations are transmitted to the mounting support (4), with at least one spring (2) which is effective between the oscillating part (1) and the mounting support (4) and with a pendulum mass (9) which is movable in response to the motion of the oscillating part (1) along with interpolation of a fluid transmission, which consists of at least one primary fluid chamber (3) which is variable in volume in the direction of motion of the oscillations and of at least one secondary chamber (5) which is likewise variable in volume in the direction of motion of the oscillations and which is acted upon by the fluid displaced from the primary chamber (3) and the effective cross-section of which is smaller than that of the primary fluid chamber (3), so that the volume of the secondary chamber (5) is varied correspondingly more severely by the fluid displaced upon the change in volume of the primary fluid chamber (3), whereby the pendulum mass (9) associated with it is accelerated and the resulting inertia force in the fluid brings about a change of pressure which as dynamic force compensates for the dynamic portion of the spring force transmitted from the spring to the mounting support (4), characterised in that the primary fluid chamber (3) and the secondary chamber (5) consist in each case of a cylindrical corrugated metal bellows or diaphragm bellows which is deformable in a low-friction manner in the axial direction, in which respect the bellows are supported on the mounting support (4), are coaxially arranged and the inertia force and spring force lie on the same line of action, in that a second system, consisting of a primary fluid chamber (3) and a secondary chamber (5), is provided, which also consists of two cylindrical, corrugated metal bellows or diaphragm bellows which are deformable in a low-friction manner and which are arranged coaxially to the bellows of the first system, in which respect the primary fluid chambers (3) and secondary chambers (5) of the first and second system are coupled in each case stiffly with one another by connecting members (6, 10) and in operation jointly accelerate the pendulum mass (9) and in this respect the volume of the one secondary chamber (5) is reduced and that of the other secondary chamber (5) is correspondingly enlarged, whilst the volumes of the primary fluid chambers (3) behave conversely.

3. A vibration isolator according to claim 2, characterised in that the connecting member (6) is a rod which carries the pendulum mass (9) and which penetrates the secondary chambers (5).

4. A vibration isolator according to claim 2, characterised in that the two secondary chambers (5) are formed by a common deformable portion.

5. A vibration isolator according to one of claims 1 to 4, characterised in that the spring which is effective between the oscillating part (1) and the mounting support (4) is formed by the metal bellows which forms the primary chamber (3) and which has the requisite inherent stiffness (Fig. 6).

6. A vibration isolator according to any one of claims 1 to 5, characterised in that the secondary chamber (5) is arranged inside the primary fluid chamber (3).

7. A vibration isolator according to claim 6, characterised in that the secondary chamber (5) is closed, filled with a compressible medium and circumcirculated by the fluid.

8. A vibration isolator according to claim 7, characterised in that the compressible medium stands under excess pressure or reduced pressure.

9. A vibration isolator according to claim 6, characterised in that the secondary chamber (5) is connected to the ambient atmosphere.

10. A vibration isolator according to one of claims 6 to 9, characterised in that the primary fluid chamber (3) has a deformable portion and a rigid portion which, along with the formation of a fluid-filled annular chamber, encircles at least a part of the secondary chamber (5).

11. A vibration isolator according to claim 10, characterised in that the cross-section of the rigid portion of the primary fluid chamber (3) is smaller than the effective cross-section of the deformable portion.

12. A vibration isolator according to claim 1 or 2, characterised in that the secondary chamber (5) is fluid-filled, and in that the transition from the primary fluid chamber (3) into the secondary fluid chamber (5) is designed in a manner which is low in flow loss.

**Revendications**

1. Isolateur de vibrations pour réduire la transmission des vibrations d'une pièce (1) vibrant périodiquement à un support (4) relié à ladite pièce (1), de telle sorte que dans le cas d'une antirésonance sensiblement aucune vibration ne soit plus transmise au support (4), ledit isolateur comportant au moins un ressort (2) agissant entre la pièce (1) vibrante et le support (4), ainsi qu'une masse pendulaire (9) qui est déplaçable en réponse au mouvement de la pièce (1) vibrante, sous interposition d'une transmission par fluide constituée d'au moins une chambre primaire (3) de fluide à volume variable dans la direction de mouvement des vibrations et d'au moins une chambre secondaire (5) alimentée par le fluide refoulé depuis la chambre primaire (3) et également à volume variable dans la direction de mouvement des vibrations, la section transversale efficace de ladite chambre secondaire étant inférieure à celle de la chambre primaire (3) de fluide, de façon que le volume de la chambre secondaire (5) varie de manière correspondante plus fortement sous l'effet du fluide refoulé lors de la variation de volume de la chambre primaire (3) de fluide, si bien que la masse pendulaire (9) qui lui est associée se trouve accélérée et que la force d'inertie qui en résulte entraîne dans le fluide une variation de pression qui compense en tant que force dynamique, la composante dynamique de la force élastique transmise par le ressort au support (4), caractérisé par le fait que la chambre primaire (3) de fluide et la chambre secondaire (5) sont respectivement constituées par un soufflet métallique ondulé ou un soufflet à membranes, de forme cylindrique, déformable à faible friction dans la direction axiale, les soufflets étant disposés coaxialement et en appui contre le support (4) et la force d'inertie ainsi que la force élastique s'appliquent sur la même ligne d'action, et qu'il est prévu un ressort (7) prétendu pour l'élévation de pression, agissant sur la masse pendulaire (9) et sur le support (4) ou respectivement sur la pièce (1), la tension préalable du ressort (7) étant choisie de façon qu'il ne résulte aucune augmentation du volume global de fluide en cours de fonctionnement.

2. Isolateur de vibrations pour réduire la transmission des vibrations d'une pièce (1) vibrant périodiquement à un support (4) relié à ladite pièce (1), de telle sorte que dans le cas d'une antirésonance sensiblement aucune vibration ne soit plus transmise au support (4), ledit isolateur comportant au moins un ressort (2) agissant entre la pièce (1) vibrante et le support (4), ainsi qu'une masse pendulaire (9) qui est déplaçable en réponse au mouvement de la pièce (1) vibrante, sous interposition d'une transmission par fluide constituée d'au moins une chambre primaire (3) de fluide à volume variable dans la direction de mouvement des vibrations et d'au moins une chambre secondaire (5) alimentée par le fluide refoulé depuis la chambre primaire (3) et également à volume variable dans la direction de mouvement des vibrations, la section transversale efficace de ladite chambre secondaire étant inférieure à celle de la chambre primaire (3) de fluide, de façon que le volume de la chambre secondaire (5) varie de manière correspondante plus fortement sous l'effet du fluide refoulé lors de la variation de volume de la chambre primaire (3) de fluide, si bien que la masse pendulaire (9) qui lui est associée se trouve accélérée et que la force d'inertie qui en résulte entraîne dans le fluide une variation de pression qui compense en tant que force dynamique, la composante dynamique de la force élastique transmise par le ressort au support (4), caractérisé par le fait que la chambre primaire (3) de fluide et la chambre secondaire (5) sont respectivement constituées par un soufflet métallique ondulé ou un soufflet à membranes, de forme cylindrique, déformable à faible friction dans la direction axiale, les soufflets étant disposés coaxialement et en appui contre le support (4) et la force d'inertie ainsi que la force élastique s'appliquent sur la même ligne d'action, et qu'il est prévu un deuxième système, constitué d'une chambre primaire (3) de fluide et d'une chambre secondaire (5), qui sont également constituées par deux soufflets métalliques ondulés ou soufflets à membranes, de forme cylindrique, déformables à faible friction, qui sont disposés coaxialement aux soufflets du premier système, les chambres primaires (3) de fluide et les chambres secondaires (5) du premier et du deuxième systèmes étant respectivement accouplées rigidement l'une à l'autre par l'intermédiaire d'organes de liaison (6, 10) et produisant conjointement en fonctionnement une accélération de la masse pendulaire (9), au cours de laquelle le volume de l'une des chambres secondaires (5) diminue, tandis que celui de l'autre chambre secondaire (5) augmente de façon correspondante, alors que les volumes des chambres primaires (3) de fluide se comportent de façon inverse.

3. Isolateur de vibrations selon la revendication 2, caractérisé par le fait que l'organe de liaison (6) est une tige traversant les chambres secondaires (5) et portant la masse pendulaire (9).

4. Isolateur de vibrations selon la revendication 2, caractérisé par le fait que les deux chambres secondaires (5) sont formées par un secteur déformable commun.

5. Isolateur de vibrations selon l'une quelconque des revendications 1 à 4, caractérisé par le fait que le ressort agissant entre la pièce (1) vibrante et le support (4) est formé par le soufflet métallique constituant la chambre primaire (3) de fluide et présentant la rigidité propre nécessaire (Fig. 6).

6. Isolateur de vibrations selon l'une quelconque des revendications 1 à 5, caractérisé par le fait que la chambre secondaire (5) est disposée à l'intérieur de la chambre primaire (3) de fluide.

7. Isolateur de vibrations selon la revendication 6, caractérisé par le fait que la chambre secondaire (5) est fermée, est remplie d'un milieu compressible et baigne dans un fluide.

8. Isolateur de vibrations selon la revendication 7, caractérisé par le fait que le milieu compressible se trouve en surpression ou en dépression.

9. Isolateur de vibrations selon la revendication 6, caractérisé par le fait que la chambre secondaire (5) est reliée à l'atmosphère environnante.

10. Isolateur de vibrations selon l'une quelconque des revendications 6 à 9, caractérisé par le fait que la chambre primaire (3) de fluide présente un secteur déformable et un secteur rigide qui entourent, en formant un espace annulaire rempli de fluide, au moins une partie de la chambre secondaire (5).

11. Isolateur de vibrations selon la revendication 10, caractérisé par le fait que la section transversale du secteur rigide de la chambre primaire (3) de fluide est inférieure à la section transversale efficace du secteur déformable.

12. Isolateur de vibrations selon la revendication 1 ou 2, caractérisé par le fait que la chambre secondaire (5) est remplie de fluide, et que le passage de la chambre primaire (3) de fluide dans la chambre secondaire (5) est agencé de façon à présenter des faibles pertes d'écoulement.

Fig. 1

Fig. 2

Fig. 3

Fig. 4

Fig. 5

Fig. 6